# EUROPEAN PATENT APPLICATION

(11) **EP 0 640 782 A1**
(43) Date of publication of application: **01.03.1995**
(21) Application number: 93830356.7
(22) Date of filing: 23.08.1993
(51) Int. Cl.: F16J 15/12

(54) **Exhaust tube gasket for internal combustion engine**

(71) Applicant: TAKO PAYEN S.p.a., I-10148 Torino (IT)
(72) Inventor: Martini, Gino, I-13051 Biella (IT)
(74) Representative: Spandonari, Carlo, Dr. Ing.

(57) **Abstract**

The gasket comprises a reinforced graphite element (10) preferably comprising two or more layers coupled together with sandwiched armors, sandwiched between two stainless steel plates (24, 26), which preferably have two corrugations or ridges (32, 34) extending concentrically along the outline of the passage aperture (20) at a short distance from its edge.

## Description

This invention is concerned with a gasket for exhaust tubes of internal combustion engines.

Conventionally, exhaust tubes of internal combustion engines, such as in motor vehicles, are connected with flat-flange joints, clamped by two or three peripheral bolts. The high temperatures reached by the exhaust gas along the conduit (800°C and above) prevented in fact the use of most of the usual gaskets, with the exception of asbestos gaskets, which, however, are undesirable on the ground of unhealthiness. Although such gasketless joints have a defective seal, this was not a problem with conventional exhausts, where the exhaust gas was led through the muffler only for purposes of silencing, the pressure leaks along the conduit having in practice no harmful consequence.

On the other hand, the problem of having a perfect seal does arise with modern catalytic exhausts, as well known to persons skilled in the field. In this case, the seal has been improved by insetion of a mica gasket in the joint, which gasket, as known, has the required property of resistance to high temperatures. Mica, however, is an expensive material, difficult to process, and, moreover, has a relatively low elasticity, which drops in the course of time. The need is therefore felt for a more practical and cheap solution to this problem.

Accordingly, it is the object of this invention to provide a gasket for exhaust tubes of internal combustion engines, which is easy and cheap to manufacture, which is free from asbestos, while still having the required properties of a good seal and temperature resistance.

Such object, together with other objects and advantages, such as will appear in the following disclosure, are attained by the invention with a gasket having the features recited in claim 1.

The invention will now be described in more detail with reference to a preferred embodiment, disclosed in the following specification and shown in the accompanying drawings, wherein:

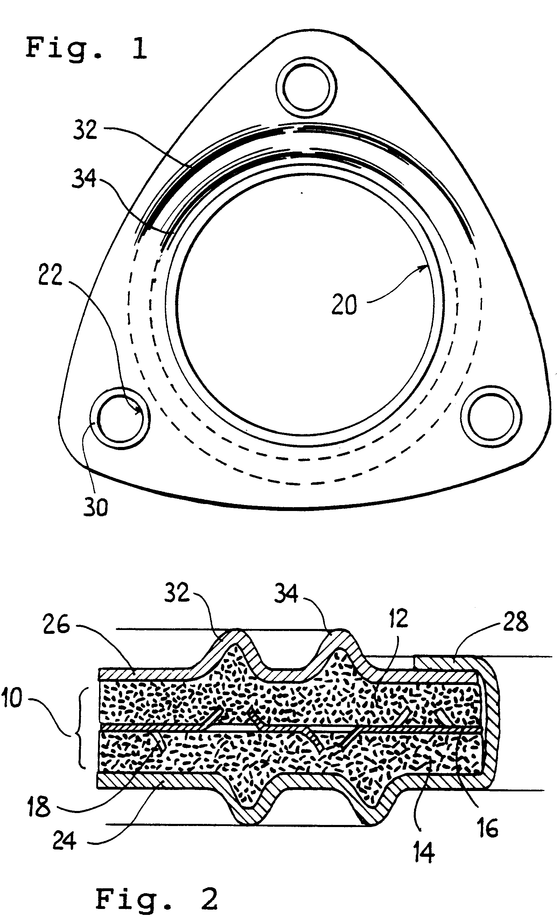

Fig. 1 is a plan view of a gasket for an exhaust tube of an internal combustion engine according to a preferred embodiment of the invention; and
Fig. 2 is a cross-sectional view, to an enlarged scale, of a portion of the gasket of Fig. 1.

With reference to the Figures, a graphite element 10 is formed of two sheets 12, 14 of lamellar graphite, coupled together with interposition of a metallic armor 16, which comprises a perforated plate, preferably of stainless steel, by alternately opposed punchings, such that transversal or oblique burrs 18 extend from the plane of the plate, and adapted to penetrate the graphite in order to maintain both sheets 12, 14 assembled together. Each sheet has, for instance, a thickness of 0.5 mm, while the armor has a thickness of 0.2 mm, the graphite element therefore having an overall thickness of about 1.20 mm. The graphite element 10 is punched in the shape of a triangle having arched sides, with a central bore 20 corresponding to the passage opening of the exhaust gas, as well as three holes 22 near the vertices of the triangle for clamping bolts (not shown), as obvious for a person skilled in the field.

Respective plates of stainless steel 24, 26 are applied to the opposite faces of graphite element 10, which plates have a profile identical to the profile of graphite element 10, as well as corresponding holes. Each plate has a preferred thickness of 0.2 mm. Plate 24 is swaged along passage 20 to form a rim 28, in a way known per se. Rims 30 of copper or the like are preferably swaged at clamping holes 22.

Each of both plates 24, 26 has two annular, concentric corrugations 32, 34, coaxial with bore 20, to form ridgess extending outwardly from the plane of the respective plate. The height of each corrugation is preferably about 0.5 mm. The radially internal corrugation 34 follows parallelly the edge of bore 20, at a short distance from it, for instance at a distance of 1 to 2 mm.

The pressure applied to plates 24, 26 in the assemblage of the gasket deforms plastically the graphite (which is free from binders), so as to eliminate any air pockets within the plates; more particularly, graphite fills completely the grooves complementary to corrugation 32, 34. There is therefore substantially no oxygen in contact with the graphite, paticularly in the area surrounding collar 28.

When a gasket as described above is clamped between opposite flat flanges of two exhaust tube sections which are to be jointed, the ridges ar partly squeezed with a deformation which is partly plastic, partly elastic, thus matching the surface of the flange, even if the latter, as a rule, is not smoothly finished. The graphite of the gasket, due both to its inherent properties and to the armor, elastically supports the clamping pressure, with a high elasticity which is constant in the course of time ad the rise of temperature.

The steel plating, which avoids any air pockets in contatc with the graphite, particularly in the area nearer to the passage at high temperature, prevents any chance of graphite combustion. Consequently, the latter maintains its properties up to a higher temperature. While graphite that is exposed to the air maintains its elasticity up to no more thatn 550°C, the graphite of the gasket described above remains elastic even when operating at working temperatures of over 1000°C. On the other hand, mica, which inherently stands high temperatures, has a low elasticity.

Instead of two concentric corrugations 32, 34, one corrugation only may be sufficient in certain cases, while it is also possible to provide three. Moreover, reinforced graphite could comprise three layers rather than two, with corresponding armors toward each of the outside layers. The thicknesses of the several parts may also vary with respect to the preferred values given above. For instance, the overal, thickness of the graphite element may vary from about 0.8 to 2 mm; the thickness of each plate about from 0.15 to 0.3 mm; and the height of the ridges about from 0.4 to 0.7 mm. Also, rim 28, instead of being made as a swaging of one of the plates, might be formed by a separate steel element.

## Claims

1. A gasket for exhaust tubes of internal combustion engines, having a passage aperture for the exhaust gas, characterized in that it comprises a graphite element (10) sandwiched between two steel plates (24, 26), and in that said plates have at least one corrugation or ridge (32, 34) extending along the outline of said passage aperture (20) at a short distance from its edge.

2. The gasket of claim 1, characterized in that said plates (24, 26) have two substantially parallel corrugations (32, 34).

3. The gasket of claim 1 or 2, characterized in that said graphite element (10) is reinforced by means of at least one reinforcement armor (16) extending in an intermediate position between its opposite sides.

4. The gasket of claim 3, characterized in that said graphite element (10) comprises two graphite sheets (12, 14) coupled together with said armor (16) sandwiched between them.

5. The gasket of claim 3, characterized in that said graphite element (10) comprises three graphite sheets (12, 14) coupled together with respective armors (16) sandwiched between them.

6. The gasket of one of claims 3 to 5, characterized in that said armor (16) comprises a metallic plate perforated by means of punches forming burrs (18) in alternate directions.

7. The gasket of one of claims 1 to 6, characterized in that said graphite element (10) has an overall thickness in the range 0.8 to 2 mm.

8. The gasket of one of claims 1 to 7, characterized in that said steel plates (24, 26) have each a thickness in the range 0.15 to 0.3 mm.

9. The gasket of one of claims 1 to 8, characterized in that said corrugations (32, 34) have each a height of about 0.5 mm.

10. The gasket of one of claims 1 to 9, characterized in that the steel of said plates (24, 26) is stainless steel.
